Europäisches Patentamt

(19) European Patent Office

Office européen des brevets

(11) Publication number : **0 210 195 B1**

# (12) EUROPEAN PATENT SPECIFICATION

(45) Date of publication of patent specification :
06.03.91 Bulletin 91/10

(51) Int. Cl.⁵ : **C09D 11/00**

(21) Application number : 86900705.4

(22) Date of filing : 27.12.85

(86) International application number :
PCT/US85/02592

(87) International publication number :
WO 86/04345 31.07.86 Gazette 86/17

(54) **BALL-POINT WRITING INSTRUMENT CONTAINING AN AQUEOUS INK COMPOSITION.**

(30) Priority : 23.01.85 US 693930
19.12.85 US 809174

(43) Date of publication of application :
04.02.87 Bulletin 87/06

(45) Publication of the grant of the patent :
06.03.91 Bulletin 91/10

(84) Designated Contracting States :
AT BE CH DE FR GB IT LI LU NL SE

(56) References cited :
GB-A- 2 094 820
GB-A- 2 131 040
US-A- 3 130 711
US-A- 4 302 121
US-A- 4 545 818
No relevant documents have been disclosed.

(73) Proprietor : THE GILLETTE COMPANY
Prudential Tower Building
Boston Massachusetts 02199 (US)

(72) Inventor : CASE, Laura, K.
14 Lockeland Road
Winchester, MA 01890 (US)
Inventor : GAJRIA, Chandrasen
84 Cushing Street
Hingham, MA 02043 (US)
Inventor : LOFTIN, Rachel, M.
9 Doris Road
Halifax, MA 02338 (US)
Inventor : PEPER, Henry
One Gregory Street
Marblehead, MA 01945 (US)

(74) Representative : Baillie, Iain Cameron et al
c/o Ladas & Parry Isartorplatz 5
W-8000 München 2 (DE)

## Description

The present invention relates to aqueous based shear-thinning ink compositions and to ball-point pens employing such ink compositions which preferably include a viscoelastic ink follower.

While there are long-recognized cost advantages in employing aqueous ink compositions in ball-pen writing instruments, their typically low viscosity leads to a number of performance disadvantages. These include the possibility of leakage around the rotating ball'due to changes in atmospheric pressure or temperature or due to temperature increases resulting from the heat conducted from the fingers of the user. Attempts have been made to overcome these disadvantages by employing a fibrous ink reservoir intended to supply a flow of ink to the rotating ball at a rate just sufficient to result in the formation of a continuous line during use but insufficient to provide an excess supply of liquid ink at the writing tip leading to leakage. Other attempts to accomplish the same result have involved the use of liquid ink reservoirs employing porous ink feed rods in the form of sintered fibrous bundles or extruded plastic ink rods having capillary channels and intended to control the rate of ink feed to the rotating ball. Examples of prior art patents employing such systems to control the flow of aqueous inks in ball-pen writing instruments include British Patent Specification No. 1,139,038 and U.S. Patents No. 3,446,564 ; No. 3,533,708 ; No. 3,572,954 ; No. 3,873,218 ; and No. 4,145,148.

The disadvantages of using an ink-feeding system of the types discussed above include failure to provide a sufficiently continuous flow of ink to the ball for rapid use and a reduced writing life since the amount of ink retained by a fibrous reservoir may amount to as much as one-half of the total amount of ink in the writing instrument. A further disadvantage lies in the fact that inks containing pigments as opposed to soluble dyes will tend to clog the capillary passages in fibrous reservoirs and feed rods further inhibiting the rate of flow and the amount of ink which is delivered to the point before the writing instrument becomes inoperative.

If it is attempted to solve the above problems by leaving out the fibrous reservoir and/or capillary feed rod and simply thickening the aqueous ink composition, another problem is encountered. Should the continuity of the ink column above the rotating ball be broken by solvent evaporation from the point or from shock during shipping or dropping, it is likely that the pen will become non-functional.

US-A-4 545 818 disclosed ink compositions consisting of coloring matter and a polymeric shear-thinning material (e.g. xanthan gum) dispersed in a polar solvent system. US-A-4 545 818 discloses ink compositions including from 0.2 to 0.45 percent by weight of xanthan gum and states that inks having less or more than the claimed range do not provide desirable inks.

According to the present invention there is provided an ink composition for a ball-point pen and having a viscosity no greater than 100 m Pa.S at shear rates provided by writing, comprising coloring matter and a polymeric shear-thinning material dispersed in a polar solvent system, characterized by said coloring matter being present in an amount up to 30 percent by weight of the ink composition and said polymeric shear-thinning material being present in an amount of from 0.5 to 5 percent by weight of the ink composition, dispersed in a polar solvent system present in an amount from 50 to 99 percent by weight of the ink composition and including at least 50 percent by weight water as the primary solvent for the polymeric shear-thinning material and where the ink composition has a shear-thinning index of from 0.01 to 0.6 and does not undergo a change in viscosity in response to temperature greater than 50 percent in the viscosity measurement of the ink composition (at the same shear rate) over at least one segment of a successive temperature range of 10°C which is within the temperature range of from 0°C to 60°C.

Also provided according to the present invention is a ball-point pen employing a liquid ink reservoir, characterized by the reservoir containing an ink composition as provided by the present invention, and where a viscoelastic follower is employed in the liquid ink reservoir.

In the preferred writing instruments of the present invention, the ink compositions are contained in hollow, non-pressurized or relatively low pressurized tubes or reservoirs and the ink is fed to the point of a ball-point pen. Preferred writing instruments also include a cap member to seal the ball point and the tip when the cap is in place to control evaporation of volatile components of the ink and leakage of air around the ball into the ink reservoir which may cause formation of a gas bubble upstream of the ball. Such a gas bubble can cause breakage of contact between the column of ink and the ball and the performance of the instrument will be affected until contact is restored. In the especially preferred writing instruments, the ink is used in combination with a viscoelastic follower composition having specific rheological properties which insure a smooth flow of ink to the ball as the ink supply is consumed.

The ink compositions employed in the practice of this invention are thickened liquids at rest. While some are characterized by having a rheological yield value, all are highly pseudoplastic or shear-thinning in use. The inks become thin liquids, having a viscosity of less than 100 cPs, at the high shear rates produced in writing with a ball-point pen. The inks contain at least one water-dispersible, polymeric, shearing-thinning material dispersed in a polar solvent system in which water is the primary solvent for the polymeric shear-thinning material. The inks also include coloring matter including dyes and/or pigments. Especially preferred polymeric shear-thinning providing materials are those which are substantially soluble in water. Other conventional ingredients such as surfactants, preservatives, corrosion inhibitors, and humectants may also be included in the ink.

The shear-thinning properties of the inks to be used in the practice of the invention can be characterized by the shear-thinning index "n" calculated by fitting shear stress (T) and shear rate (j) values (obtained from rheological measurements on a viscometer such as the Haake Rotovisco, Haake Inc., Saddle Brook, NJ) to the empirical power law equation $T = Kj^n$ (K and n are calculated constants). Polymeric shear-thinning providing materials useful in the practice of this invention are those that give relatively low "n" values ranging from 0.01 to 0.60. Preferred polymeric shear-thinning materials give "n" values of from 0.05 to 0.30.

The polymeric shear-thinning materials of aqueous ink compositions of the present invention are the essential ingredients which provide the primary control over the rheological and/or thixotropic characteristics of the ink compositions. Other thickening materials may be used in combination with the shear-thinning material(s) if desired to provide ink compositions having selected performance characteristics. However, such other materials are not needed or required to achieve the essential rheological and/or thixotropic control function provided by the shear-thinning material(s).

Polymeric shear-thinning materials suitable in the practice of the present invention are those which can provide aqueous based ink compositions having a shear thinning index between 0.01 to 0.60. Additionally, suitable polymeric shear-thinning materials provide aqueous ink compositions which do not undergo a significant change in viscosity in response to temperature. For the purposes of this invention, "a significant change in viscosity in response to temperature" is a change of greater than 50 percent in the viscosity measurement of the ink composition (at the same shear rate) over at least one segment of a successive temperature range of 10°C which is within the temperature range of from 0°C to 60°C. Especially preferred shear-thinning materials are those which do not undergo any significant change in viscosity over a 10°C temperature range segment within the temperature range between 5°C to 35°C. In other words, suitable polymeric shear-thinning materials are those which provide aqueous ink compositions having the described shear thinning index and also provide ink compositions in which the change in viscosity measurement is not greater than 50 percent between for example, 0°C-10°C or 10°C-20°C or 20°C-30°C or 25°C-35°C, etc.

Especially preferred specific shear-thinning materials are xanthan gum, carageenan gum, locust bean gum, hydroxyethylcellulose and guar gum. Xanthan gum is particularly preferred since aqueous based, xanthan gum containing ink compositions have been found to have "n" values of about 0.10 to 0.20. Additionally, aqueous based, xanthan gum containing inks do not undergo any significant changes in viscosity measurements over a temperature range from 0°C to 40°C or higher. Actually, the viscosity measurements for aqueous based, xanthan gum containing inks are substantially constant throughout the above temperature range. Equilibrium shear stress values for aqueous based carrageenan gum containing inks (obtained by repeated measurements on the Haake Rotovisco) fitted to the power law yield a shear-thinning index of 0.3 to 0.4. Aqueous based carrageenan gum containing inks also provide viscosity measurements which are substantially constant over the temperature range from the 5°C to 35°C. Aqueous based inks containing hydroxyethylcellulose have a shear-thinning index calculated to be 0.4 to 0.6 and do not undergo any significant changes in viscosity measurements over a temperature range from 15°C to 30°C. Preferred commercially available xanthan gums are sold by the Kelco Company under the trade names KELTROL and KELZAN.

While the amount of any of the above-mentioned water-dispersible gums or resins useful in the practice of the invention will vary depending upon which gum or other ingredients are used, the best balance of performance characteristics particularly in terms of ink lay down rates and ink lay down characteristics is achieved by using amounts of polymeric shear-thinning material(s) between 0.5 to 5 percent by weight and preferably between 0.5 to 2.5 percent by weight. Ink compositions including amounts of shear-thinning material less than 0.5 percent by weight provide acceptable performance characteristics when used in pens which include fine points, i.e., points having a diameter no greater than 0.5 mm. However, such ink compositions tend to wick, blot or leak excessively when used in pens having larger diameter points even though the ink reservoir of the pen is unpressurized. In contrast, ink compositions having increased amounts of shear-thinning materials, such as between 0.7 to 1.5 percent by weight or higher, provide an extremely desirable combination of performance characteristics when used in pens having fine points as well as in pens having point diameters up to 1. mm or somewhat higher.

Ink compositions of this invention are aqueous based shear-thinning inks and include a polar solvent system in which water is the essential solvent and functions as the primary solvent for the polymeric shear-thinning material(s). The polar solvent system may comprise from 50 to 99 percent by weight of the ink

3

composition. While water is the primary or essential solvent of the solvent system, other polar solvents can be included in the solvent system in plare of up to 50 percent (or somewhat higher) by weight of the water in the solvent system. Preferred ink compositions of this invention are those having 70 percent (or greater) by weight of water in the polar solvent system. As will be demonstrated in the Examples which follow, ink compositions of this invention can comprise polar solvent systems having 100 percent by weight water or substantially 100 percent by weight water. In short, water is the primary solvent of the polar solvent systems of inks of the present invention and, the use of any other particular polar solvent and the amount thereof used in combination with water is not an especially critical feature in the ink compositions of this invention.

Other polar solvents which may be included in the polar solvent systems of ink compositions of the present invention are those which function as hygroscopic wetting agents useful in reducing the ink drying rates and include dihydric alcohols such as ethylene glycol, diethylene glycol, triethylene glycol, 1,3-propanediol, propylene glycol, 1,3-butylene glycol, 1,4-butanediol, 2,3-butylene glycol, neopentyl glycol, hexylene glycol, thiodiglycol, and the like. It is also possible to employ tri- and higher-hydric alcohols such as glycerin, trimethylolethane, trimethylolpropane, 3-methyl pentane-2,3,5-triol, diglycerin, sorbitol, and the like. Other polar-solvent wetting agents may include pyrrolidone, N-methyl-2-pyrrolidone, dimethylformamide, urea, and the like. Preferred amounts of other polar solvents which may be included in the polar solvent system are between 5 to 20 percent by weight of the total weight of the polar solvent system.

It has also been found useful to include in the ink compositions of this invention an organic solvent material capable of penetrating into the paper-writing surface to act as a drying agent and also to act as a levelling agent for the ink to produce a smooth writing result. Examples of such materials include glycol ethers such as alkylene glycol mono- or di-alkyl ethers, glycol ether acetates such as alkylene glycol mono- or di-alkyl ethers and glycol acetates such as alkylene glycol mono- or di-acetates. The especially preferred drying and levelling function complex includes fluorinated polysilane surface active agents such as the product sold under the trademark LEVELENE 100 (American Color & Chemical Corp.). These materials, when employed, can be used in amounts of from 0.01 to 2.0 percent by weight, preferably from 0.1 to 1.0 percent.

The coloring matter to be employed in the inks of this invention may be any of the water-soluble or dispersible dyes or pigments or mixtures thereof known to be useful in the formulation of inks for writing instruments. Preferred ink compositions comprise up to 30 percent by weight coloring matter based on the total weight of the ink composition. Examples of dyes or pigments which can be used include, but are not limited to, DIRECT VIOLET 99, DIRECT BLUE 86 (C.I. 74180), (both manufactured by the Mobay Chemical Co.); ELFTEX 5, MOGUL L. and REGAL 330R, all carbon blacks (The Cabot Corporation), HIDRACOL X9220 and X9200 (Ciba-Geigy) ; and FAST LIGHT ORANGE 2GM (American Cyanamid).

Ink compositions of the present invention can include sequestering agents to maintain or improve stability. These sequesterants are normally added in the amount of 1-50% by weight of the water-soluble gum. Examples of useful sequestering agents include sodium hexametaphosphate, trisodium phosphate, and sodium glucoheptanate, and tetrasodium EDTA.

Ink compositions of the present invention can also include preservatives to prevent the growth of microorganisms, yeast, and mold. Examples of such preservatives include methyl p-hydroxybenzoate, propyl p-hydroxybenzoate, DOWICIL 75 and 200 (active ingredient : 1-(3-chloroallyl)-3,5,7-triaza-1-azoniaadamantane chloride (Dow Chemical Co.). These biocides are typically present at amounts between 0.01 to 5 percent by weight of the ink.

When aqueous ink formulations are likely to come in contact with metals, it is possible that corrosion will occur. This can result in degradation of the metal surface over time. To prevent this occurrence, corrosion inhibitors such as benzotriazole are often used. Such materials may constitute up to about 5 percent by weight of the ink but are preferably used in amounts less than 0.5 percent.

The inks of this invention are easily prepared by combining the desired ingredients in a blender or mixing with a propeller stirrer until homogeneity is achieved. Preferably the water-dispersible polymeric shear-thinning material is first added to distilled water and this combination mixed for about two hours. The other ingredients, if present, are added in the following order : other polar solvents, sequestering agents, preservatives, surfactants, corrosion inhibitors, and dyes and/or pigments. In some cases, the shear-thinning material can be pre-wet with a humectant if desired such as propylene glycol or glycerol. Generally, the amount of such humectant is 1 to 5 times by weight of the amount of shear-thinning material added.

Typical formulations of inks to be used in the practice of this invention follow.

## EXAMPLE I

| Material | Weight Percent |
|---|---|
| Xanthan Gum | 1.00 |
| EDTA (tetrasodium) | 0.30 |
| Fluorinated polysilane surface active agent[1] | 0.50 |
| Benzotriazole | 0.20 |
| Methyl p-hydroxybenzoate | 0.30 |
| Propylene glycol | 15.00 |
| Dye (DIRECT VIOLET 99) | 6.00 |
| Water | 76.70 |

1. The fluorinated polysilane surface active agent used was a commercially available surface active agent sold by American Color and Chemical Company under the trade name LEVELENE 100.

## EXAMPLE II

| Material | Weight Percent |
|---|---|
| Hydroxyethylcellulose | 1.25 |
| Dye-(FAST LIGHT ORANGE 2GM) | 3.30 |
| Dye (HIDACID FTM VIOLET 49) | 2.20 |
| Polyoxyethylene 20 sorbitan monolaurate (Tween 20) | 0.50 |
| Benzotriazole | 0.20 |
| Methyl p-hydroxybenzoate | 0.30 |
| Water | 92.25 |

## EXAMPLE III

| Material | Weight Percent |
|---|---|
| Xanthan Gum | 0.8 |
| EDTA (Tetrasodium) | 0.3 |
| NaOH (10% solution) | 0.1 |
| Methyl Paracept | 0.3 |
| Defoaming Agent[2] | 0.1 |

| Material | Weight Percent |
|---|---|
| Benzotriazole | 0.1 |
| DOWICIL 200 (preservative) | 0.2 |
| Dyes[3.] (liquid dispersions) | 36.0 |
| Deionized Water | 62.1 |

2. The defoaming agent used in this and the following Example was a commercially available defoaming agent sold by Witco Chemical Company under the trade name BALAB 3017A.

3. The dyes used in this and the following Examples are commercially available, water dispersions of black and violet dyes sold by Mobay Chemical Company under the trade name PONTAMINE BLACK and PONTAMINE VIOLET. PONTAMINE BLACK contains about 40 percent by weight solids while PONTAMINE VIOLET contains about 35 percent by weight solids. The ratio of PONTAMINE BLACK to PONTAMINE VIOLET used was 5 :1.

## EXAMPLE IV

| Material | Weight Percent |
|---|---|
| Xanthan Gum | 1.0 |
| EDTA Tetrasodium | 0.3 |
| NaOH (10% solution) | 0.1 |
| Methyl Paracept | 0.3 |
| Defoaming Agent | 0.1 |
| Benzotriazole | 0.1 |
| DOWICIL 200 | 0.2 |
| LEVELENE 100 | 0.3 |
| Dyes (liquid dispersions) | 30.0 |
| Distilled Water | 67.0 |

The ink compositions of Examples II, III and IV include polar solvent systems which contain at least 98 percent by weight water and most likely contain about 100 percent by water. Accordingly, water is the primary solvent in the polar solvent systems of ink compositions of the present invention. Other polar solvents may be present in the composition but as evidenced by Examples II-IV, they are not needed to provide shear-thinning inks having the desired combination of performance characteristics.

## EXAMPLE V

| Material | Weight Percent |
|---|---|
| Xanthan Gum | 0.3 |
| Benzotriazole | 0.3 |
| Preservative | 0.3 |
| Lubricant | 0.5 |
| LEVELENE 100 | 0.5 |
| Dyes (liquid dispersions) | 24.0 |
| Distilled Water | 74.1 |

The ink of Example V was included in a reservoir of a ball-point pen which included a ball point having a diameter of 0.8 mm. The ink provided extremely heavy lay-down characteristics and high lay-down rates indicating a low yield value or yield strength for the ink. Additionally, the ink was found to wick, that is to say, the ink stained cloth or paper when the point was maintained in contact with the cloth or paper. Wicking is a result of the capillary forces of the fibers of cloth or paper overcoming the yield value or yield strength of the ink to withdraw ink which collects about the point from the pen. Wicking of the ink of Example V can be controlled hy using the ink in a pen having a fine ball point, i.e., a point having a diameter 0.5 mm or lower. However, the problem is aggravated if the ball point diameter is increased above 0.5 mm.

In contrast to the ink of Example V, inks of the present invention containing more than 0.5 percent by weight xanthan gum and particularly those containing more than 0.75 percent by weight xanthan gum provide a desirable combination of lay-down rates and characteristics when used in pens having fine points or points of a diameter greater than 0.5 mm. For example, such inks do not evidence wicking when used in ball-point pens having diameters of 0.8 mm or greater.

Writing or marking instruments of the present invention include structural elements common to conventional and commercially available writing instruments. Essentially, these elements include a body retaining an ink reservoir, means for delivery of the ink to a socket located at one end of the instrument and a rotatable point retained in the socket and adapted to apply ink delivered to the socket to a surface to provide visible markings on the surface.

It is conventional in ball-point pens having non-shear-thinning inks of low viscosity to employ a follower in the ink reservoir behind the ink supply at the opposite end from the ball point to prevent back leakage of the ink. Ideally, such followers do not inhibit the flow of ink to the point and maintain their location when the writing instrument is dropped. In addition, these followers should not show any syneresis or separation over time nor break apart during use.

During writing, the ink within the reservoir is depleted and the follower, which is in contact with both the top surface of the ink and the walls of the reservoir, moves toward the rotating ball as the ink level drops. The follower should maintain its coherence and integrity and should be insoluble and immiscible with the ink. It is desirable that the follower composition should not adhere to the walls of the reservoir as the ink supply is consumed.

Heretofore, ball-point pens containing aqueous-based inks have been fabricated to store the ink supply in a fibrous reservoir. The shear-thinning inks of this invention require no fibrous reservoir to contain the ink but rely on the use of a follower with properties described hereafter. In addition to prevention of ink runback due to gravity leakage, the follower retards the evaporation of the ink solvent system.

We have found that the feeding of the shear-thinning inks described hereinabove to the rotating ball can be unexpectedly improved and the risk of shock breakage in the ink column above the ball reduced by the use of a viscoelastic follower composition which exhibits predominantly elastic response at low frequency or shear rate and a predominantly viscous response at a high frequency or shear rate. Such compositions have been found to follow the ink column as the ink is consumed with minimum adhesion to the walls of the reservoir and to act as a good shock absorber if the pen is dropped thus reducing the risk that the ink column will become broken leading to premature failure.

An additional benefit of many of the viscoelastic followers described by this invention is their maintenance of a stable interface between the ink and follower during periods of long-term, elevated temperature storage. Non-viscoelastic followers tend to physically separate from the ink surface under such storage conditions.

In an experiment designed to compare the behavior of viscoelastic and non-viscoelastic followers, the following two compositions were compared. Composition A comprised a mixture of 49 percent mineral oil (KAYDOL, White Mineral Oil, Witco Chemical Co.), 49 percent polybutene (M.W. 2500), and 2 percent of a thickening agent, dimethyldioctadecylammonium bentonite (BENTONE 34 from National Lead Company). Composition B comprised a mixture of 39 percent mineral oil, 58 percent polybutene, and 3 percent of the bentonite thickener.

Viscoelastic measurements of the two compositions were made using a Rheometrics Mechanical Spectrometer Model RDS-7700, (manufactureed by Rheometrics Inc., Piscataway, NJ) fitted with 50 millimeter parallel plates having a 0.4 millimeter gap setting, making the frequency values convertible to shear rate in second$^{-1}$ units by multiplying by the number 62.5 (shear rate at 1 rad/sec. = 62.5 sec$^{-1}$). The observed tan delta values obtained from the equipment at various frequencies are shown below in Table 1.

## TABLE I

### Tan Delta Values

| Frequency in Rad/Second | Composition A | Composition B |
|---|---|---|
| 0.10 | 0.69 | 4.82 |
| 0.16 | 0.72 | 2.77 |
| 0.25 | 0.80 | 5.07 |
| 0.40 | 0.85 | 3.67 |
| 0.63 | 0.92 | 3.88 |
| 1.00 | 0.84 | 3.25 |
| 1.59 | 1.18 | 4.28 |
| 2.51 | 1.46 | 2.95 |

| Frequency in Rad/Second | Composition A | Composition B |
|---|---|---|
| 3.98 | 1.83 | 2.75 |
| 6.31 | 2.34 | 2.51 |
| 10.00 | 2.98 | 2.39 |
| 15.85 | 4.02 | 2.34 |
| 25.12 | 5.45 | 2.38 |
| 39.81 | 7.53 | 2.50 |
| 63.10 | 10.57 | 2.71 |
| 100.00 | 14.90 | 3.00 |
| 158.50 | 21.33 | 3.42 |
| 251.20 | 30.73 | 4.04 |
| 398.10 | 44.61 | 5.13 |
| 500.00 | 54.26 | 6.08 |

As shown by the above data, Composition A exhibited a steady increase in tan delta values over the range of measurement in a manner typical of viscoelastic compositions having a predominantly elastic response (low tan delta values) at low frequency or shear rate and predominantly viscous response (high tan delta values) at high frequency or shear rate. When evaluated in a ball-point pen containing an ink having shear-thinning properties as described hereinabove, the follower was found to function satisfactorily, following the ink column toward the rotating ball and acting as a good shock absorber to prevent rearward movement of the ink upon dropping of the pen.

Examination of the data for Composition B, on the other hand, showed a generally random, fairly flat tan delta frequency relationship. When evaluated in a pen, Composition B was found to have high adhesion and poor flow characteristics, making it unsuitable for follower use.

A simple, non-instrumental method for determining whether or not a composition is viscoelastic is disclosed in U.S. Patent 3,425,779 wherein the test is described in the following language :

"As a practical matter it can be determined whether or not a marking or writing fluid has viscoelastic characteristics or properties as desired with this invention by a rather simple test. In this test a flat-bladed spatula is inserted within a body of a marking or writing fluid and is twisted a fraction of a turn about its axis. Such a spatula or similar instrument will remain in the position to which it is turned after being held in this position for a significant time interval such as ten minutes if the fluid is viscoelastic, but will tend to return to or towards its initial position if immediately released after being turned. The tendency of the spatula or similar instrument to move toward its original position when immediately released in this test is considered to demonstrate elastic characteristics whereas the tendency of the spatula or similar instrument to remain in place after being held for a time interval is considered to demonstrate that the fluid or composition is not truly elastic in an absolute sense, but that it possesses viscoelastic characteristics . . ."

The same method may be used in the evaluation of follower compositions for use in the practice of this invention.

A wide variety of follower compositions may be used in the practice of our invention. It is necessary, however, that such compositions exhibit at least a minimum viscoelasticity as defined hereinafter. The useful compositions are in general based on oily materials which have been thickened to a grease-like consistency. Examples of oils which may be used include petroleum oils, polyglycols, polyesters, polybutenes, and silicone oils. These may be thickened, as is well known in the art, by the inclusion of materials such as fatty acid metal soaps, modified clays, silica gel, carbon black, natural or synthetic rubber, and various synthetic polymers.

The preferred viscoelastic follower compositions, which may be used in the practice of our invention, comprise mixtures of mineral oil, polybutenes, and organophilic clay thickeners. The mineral oils to be used may comprise any of the conventional mineral oils known by those skilled in the art to be useful in the preparation of ink follower compositions including materials referred to as liquid paraffin, white mineral oil, or mixtures of liquid hydrocarbons from petroleum. These oils may have a viscosity in the range of 100 to 2000 SSU (Seconds Saybolts Universal) at 35°C. The preferred viscosity range is from 200 to 750 SSU at 38°C. The most preferred mineral oil is a white oil purified by hydrorefining and which has a viscosity in the range of 300 to 400 SSU at 38°C.

The polybutenes which may be used in the practice of our invention are those commercially available as mixtures of n-butylene and isobutylene polymers and which have a number average molecular weight ranging from 500 up to 5000 as measured by vapor pressure osmometry. We prefer to use polybutenes having an average molecular weight ranging from 1000 to 3000.

The mineral oil-polybutene mixtures, which form the base of our preferred follower compositions, are thickened to form a grease-like composition by using organophyllic clays. These clays are obtained by treating bentonites or montmorillonites with onium compounds, especially ammonium compounds. The treated clays are organophilic and swell in organic fluids such as the above-described base oils forming stable gels. Mixtures of such organophilic clays can, of course, be used.

The specific proportions of the base oils and thickener used will vary depending upon the particular oil and thickener employed. The proportions are critical however in producing a composition having the requisite viscoelastic properties. Based upon studies of the type described above and summarized in Table I, we have concluded that, to be useful in the practice of our invention, a follower composition must exhibit increasing tan delta values over the shear rate range of 5 to 30,000 sec.$^{-1}$ and must, in addition, exhibit tan delta values of less than 1 at shear rates up to 50 sec.$^{-1}$.

Our preferred follower compositions can be prepared by thickening mixtures of about 5 to about 95 percent by weight mineral oil and about 5 to about 95 percent by weight polybutene with from about 0.1 to about 10.0 percent by weight clay thickener. In general, the amount of clay thickener is the critical element with small added amounts rapidly altering the viscoelastic character of the composition, moving it outside of the frequency response parameters given above. In general, we prefer to use less than 5.0 percent by weight clay thickener.

In a preferred form of the practice of our invention, we include a mechanical element to further insure that the ink column adjacent the rotating ball does not become broken by being replaced by a gas bubble caused by evaporation of volatile solvent around the rotating ball or by entry of air around the ball due to dropping or by permitting the pen to remain upcapped during periods of non-use.

This preferred form of the invention comprises a ball-point writing instrument containing an aqueous shear-thinning ink as described above in combination with a viscoelastic follower as described above and employing in addition a cap member adapted to sealingly contact the pen tip comprising the rotating ball and its seat in a manner to prevent the passage of air or other gas between the surfaces of the ball and seat. Such a cap construction is shown in the prior art, inter alia, in U.S. Patent 2,428,960 and typically employs a pad of soft polyvinyl chloride, polyurethane elastomer, natural or synthetic rubber or other relatively soft resilient material against which the ball and seat are sealingly engaged when the pen and cap are assembled in a closed position.

## Claims

1. An ink composition for a ball-point pen and having a viscosity no greater than 100 m Pa.S at shear rates provided by writing, comprising coloring matter and a polymeric shear-thinning material dispersed in a polar solvent system, characterized by said coloring matter being present in an amount up to 30 percent by weight of the ink composition and said polymeric shear-thinning material being present in an amount of from 0.5 to 5 percent by weight of the ink composition, dispersed in a polar solvent system present in an amount from 50 to 99 percent by weight of the ink composition and including at least 50 percent by weight water as the primary solvent for the polymeric shear-thinning material and where the ink composition has a shear-thinning index of from 0.01 to 0.6 and does not undergo a change in viscosity in response to temperature greater than 50 percent in the viscosity measurement of the ink composition (at the same shear rate) over at least one segment of a successive temperature range of 10°C which is within the temperature range of from 0°C to 60°C.

2. An ink composition of claim 1, characterized in that said polymeric shear-thinning material is xanthan gum or carageenan gum or locust bean gum or hydroxyethylcellulose or guar gum or mixtures of these.

3. An ink composition of claim 1, characterized by having a shear-thinning index of from 0.05 to 0.30 or from 0.10 to 0.20.

4. An ink composition of claim 1, characterized in that said polar solvent system comprises at least one polar solvent other than water, said polar solvent other than water being for example glycerol, ethylene glycol, propylene glycol or mixtures of these.

5. An ink composition of claim 1, characterized by including a drying and levelling agent, said drying and levelling agent for example being a fluorinated polysilane surface-active agent.

6. An ink composition of claim 1, characterized in that said ink composition does not undergo a change in viscosity as defined over a 10°C temperature range segment within the temperature range of from 5°C to 35°C.

7. An ink composition of claim 1, characterized in that said polar solvent system either comprises greater than 70 percent by weight water, or comprises greater than 85 percent by weight water, or comprises greater than 95 percent by weight water.

8. An ink composition of claim 1, characterized in that said polymeric shear-thinning material is present in an amount from 0.5 to 2.5 percent by weight of the ink composition.

9. A ball-point pen employing a liquid ink reservoir, characterized by the reservoir containing an ink composition as defined in any of the preceding claims, and where a viscoelastic follower is employed in the liquid ink reservoir.

10. A ball-point pen of claim 9, characterized in that said ink follower exhibits increasing tan delta values over the shear rate range of 5 to 30,000 sec.$^{-1}$ and exhibits, in addition tan delta values of less than 1 at shear rates up to 50 sec.$^{-1}$

11. A ball-point pen of claim 10, characterized in that said viscoelastic ink follower comprises a mixture of from 5 to 95 percent by weight mineral oil, 5 to 95 percent by weight polybutene, and up to 10 percent by weight clay thickener.

12. A ball-point pen of claim 10, characterized in that said polybutene has a number of average molecular weight of from 500 to 5,000.

13. A ball-point pen of claim 10, characterized in that said clay thickener consists of a bentonite or a montmorillonite which has been treated with an onium compound.

14. A ball-point pen of claim 9, characterized by being in combination with a cap member adapted to sealingly contact the pen tip when the pen and cap are assembled in a closed position to prevent the passage of air or other gas between the surface of the ball and seat.

## Ansprüche

1. Schreibfarbenzusammensetzung für einen Kugelschreiber mit einer Viskosität von höchstens 100 mPa.s bei den durch Schreiben bewirkten Schergeschwindigkeiten, mit färbendem Gut und einem die Scherfestigkeit vermindernden, polymeren Verdünnungsmittel, die in einem polaren Lösungs-mittelsystem dispergiert sind, dadurch gekennzeichnet, daß das färbende Gut in einer Menge van bis zu 30 Gew.-% der Schreibpastenzusammensetzung und das die Scherfestigkeit vermindernde, polymere Verdünnungsmittel in einer Menge von 0,5 bis 5 Gew.-% der Schreibfarbenzusammensetzung vorhanden und in einem polaren Lösungsmittelsystem dispergiert sind, das in einer Menge von 50 bis 99 Gew.-% der Schreibfarbenzusammensetzung vorhanden ist und das mindestens 50 Gew.-% Wasser als primäres Lösungsmittel für das die Scherfestigkeit vermindernde polymere Verdünnungsmittel enthält, wobei die Schreibfarbenzusammensetzung einen verdünnungsbedingten Scherfestikeitverminderungsindex von 0,01 bis 0,6 hat und bei einer bei gleicher Schergeschwindigkeit durchgeführten Messung der Viskosität der Schreibfarbenzusammensetzung in mindestens einem in dem Temperaturbereich von 0 bis 60°C liegenden, zusammenhängenden Temperaturbereichsabschnitt von 10°C keine temperaturabhängige Viskositätsänderung um mehr als 50% erfährt.

2. Schreibfarbenzusammensetzung nach Anspruch 1, dadurch gekennzeichnet, daß das die Scherfestigkeit vermindernde polymere Verdünnungsmittel aus Xanthangummi oder Carageengummi oder Johannisbrotkernmehl oder Hydroyethylcellulose oder Guargummi oder Gemischen derselben besteht.

3. Schreibfarbenzusammensetzung nach Anspruch 1, dadurch gekennzeichnet, daß sie einen verdünnungsbedingten Scherfestigskeitsverminderungsindex von 0,05 bis 0,30 oder von 0,10 bis 0,20 hat.

4. Schreibfarbenzusammensetzung nach Anspruch 1, dadurch gekennzeichnet, daß das polare Lösungsmittelsystem mindestens ein polares Lösungsmittel enthält, das nicht Wasser ist, und das beispielsweise aus Glycerin, Ethylenglykol, Propylenglykol oder Gemischen derselben besteht.

5. Schreibfarbenzusammensetzung nach Anspruch 1, dadurch gekennzeichnet, daß sie ein Trocken- und Verlaufmittel enthält, das beispielsweise ein Tensid aus einem fluorierten Polysilan ist.

6. Schreibfarbenzusammensetzung nach Anspruch 1, dadurch gekennzeichnet, daß die Schreibfarbenzusammensetzung in einem in dem Temperaturbereich von 5 bis 35°C liegenden Temperaturbereichsabschnitt von 10°C keine Viskositätsänderung der angegebenen Art erfährt.

7. Schreibfarbenzusammensetzung nach Anspruch 1, dadurch gekennzeichnet, daß das polare Lösungsmittelsystem entweder mehr als 70 Gew.-% Wasser oder mehr als 85 Gew.-% Wasser oder mehr als 95 Gew.-% Wasser enthält.

8. Schreibfarbenzusammensetzung nach Anspruch 1, dadurch gekennzeichnet, daß das die Scherfestigkeit vermindernde polymere Verdünnungsmittel in einer Menge von 0,5 bis 2,5 Gew.-% der Schreibfarbenzusammensetzung vorhanden ist.

9. Kugelschreiber mit einem Behälter für eine flüssige Schreibfarbe, dadurch gekennzeichnet, daß der Behälter eine Schreibfarbenzusammensetzung nach einem der vorhergehenden Ansprüche enthält und daß in dem Farbflüssigkeitsbehälter ein viskoelastisches Folgeelement verwendet wird.

10. Kugelschreiber nach Anspruch 1, dadurch gekennzeichnet, daß das der Schreibfarbe folgende Element in einem Schergeschwindigkeitsbereich von 5 bis 30000 $s^{-1}$ zunehmende tan Delta-Werte und bei Schergeschwindigkeiten bis zu 50 $s^{-t}$ tan Delta-Werte unter 1 besitzt.

11. Kugelschreiber nach Anspruch 10, dadurch gekennzeichnet, daß die der Schreibfarbe folgende viskoelastische Masse mindestens teilweise aus einem Gemisch aus 5 bis 9 Gew.-% Mineralöl, 5 bis 9 Gew.-% Polybuten und bis zu 10 Gew.-% Ton als Verdickungsmittel besteht.

12. Kugelschreiber nach Anspruch 10, dadurch gekennzeichnet, daß das Polybuten ein zahlenmäßig durchschnittliches Molekulargewicht von 500 bis 5000 besitzt.

13. Kugelschreiber nach Anspruch 10, dadurch gekennzeichnet, daß der als Verdickungsmittel verwendete Ton aus einem Bentonit oder einem Montmorillonit besteht, der mit einer Oniumverbindung behandelt worden ist.

14. Kugelschreiber nach Anspruch 9, dadurch gekennzeichnet, daß er mit einer Kappe kombiniert ist, die geeignet ist, bei im geschlossenen Zustand mit der Kappe zusammengesetztem Kugelschreiber dicht an der Schreibspitze anzuliegen, um einen Durchtritt von Luft oder einem anderen Gas zwischen der Oberfläche der Kugel und des Sitzes zu verhindern.

**Revendications**

1. Composition d'encre pour stylo à bille ayant une viscosité d'au plus 100 mPa.s aux gradients de cisaillement apparaissant lors de l'écriture, comprenant une matière colorante et un produit polymère à fludification par cisaillement dispersé dans un système de solvant polaire, caractérisée en ce que ladite matière colorante est présente en une quantité atteignant 30% en poids de la composition d'encre et en ce que ledit produit polymère à fludification par cisaillement est présent en une quantité de 0,5 à 5% en poids de la composition d'encre, dispersé dans un système de solvant polaire présent en une quantité de 50 à 99% en poids de la composition d'encre et comprenant au moins 50% en poids d'eau en tant que solvant principal du produit polymère à fludification par cisaillement, et en ce que la composition d'encre a un indice de fludification par cisaillement de 0,01 à 0,6 et ne subit pas de modification de viscosité, en réponse à la température, supérieure à 50% dans la mesure de viscosité de la composition d'encre (au même gradient de cisaillement) sur au moins un segment d'une gamme de température successive de 10°C qui est située à l'intérieur de la gamme de température de 0°C à 60°C.

2. Composition d'encre selon la revendication 1, caractérisée en ce que ledit produit polymère à fludification par cisaillement est la gomme de xanthane ou la gomme de carrageenan ou la gomme de caroube ou l'hydroxyéthylcellulose ou la gomme de guar ou des mélanges de celles-ci.

3. Composition d'encre selon la revendication 1, caractérisée en ce qu'elle a un indice de fludification par cisaillement compris entre 0,05 et 0,30 ou entre 0,10 et 0,20.

4. Composition d'encre selon la revendication 1, caractérisée en ce que ledit système de solvant polaire comprend au moins un solvant polaire autre que l'eau, ledit solvant polaire autre que l'eau étant par exemple le glycérol, l'éthylène glycol, le propylène glycol ou des mélanges de ceux-ci.

5. Composition d'encre selon la revendication 1, caractérisée en ce qu'elle comprend un agent desséchant et égalisant, ledit agent desséchant et égalisant étant par exemple un agent tensioactif à base de polysilane fluoré.

6. Composition d'encre selon la revendication 1, caractérisée en ce que ladite composition d'encre ne subit pas de variation de viscosité telle que définie sur un segment d'une gamme de température de 10°C située dans la gamme de température de 5°C à 35°C.

7. Composition d'encre selon la revendication 1, caractérisée en ce que ledit système de solvant polaire comprend plus de 70% en poids d'eau, ou comprend plus de 85% en poids d'eau, ou comprend plus de 95% en poids d'eau.

8. Composition d'encre selon la revendication 1, caractérisée en ce que ledit produit polymère a fludification par cisaillement est présent en une quantité de 0,5 à 2,5% en poids de la composition d'encre.

9. Stylo à bille utilisant un réservoir d'encre liquide, caractérisé en ce que le réservoir contient une composition d'encre telle que définie dans l'une quelconque des revendications précédentes, et dans lequel un suiveur viscoélastique est utilisé dans le réservoir d'encre liquide.

10. Stylo à bille selon la revendication 9, caractérisé en ce que ledit suiveur d'encre présente des valeurs de tangente delta croissantes sur la gamme de gradient de cisaillement de 5 à 30000 s⁻¹ et présente en outre des valeurs de tangente delta inférieures à 1 pour des gradients de cisaillement atteignant 50 s⁻¹.

11. Stylo à bille selon la revendication 10, caractérisé en ce que ledit suiveur d'encre viscoélastique comprend un mélange de 5 à 95% en poids d'huile minérale, de 5 à 95% en poids de polybutène et de jusqu'à 10% en poids d'épaississant à base d'argile.

12. Stylo à bille selon la revendication 10, caractérisé en ce que ledit polybutène a un poids moléculaire moyen de 500 à 5000.

13. Stylo à bille selon la revendication 10, caractérisé en ce que ledit épaississant à base d'argile consiste en une bentonite ou en une montmorillonite qui a été traitée avec un composé d'onium.

14. Stylo à bille selon la revendication 9, caractérisé en ce qu'il est combiné à un capuchon adapté pour entrer en contact de façon étanche avec l'extrémité du stylo lorsque le stylo et le capuchon sont assemblés en position fermée pour empêcher le passage de l'air ou d'un autre gaz entre la surface de la bille et celle du siège.